# EUROPEAN PATENT APPLICATION

(11) **EP 4 617 150 A1**
(43) Date of publication of application: **17.09.2025**
(21) Application number: 23929800.3
(22) Date of filing: 31.08.2023
(51) Int. Cl.: B62D 21/00

(54) **VEHICLE FRAME ASSEMBLY, ENERGY STORAGE STRUCTURE, AND VEHICLE**

(30) Priority: 29.03.2023 CN 202310363241
(71) Applicant: BYD Company Limited, Shenzhen, Guangdong 518118 (CN)
(72) Inventor: PENG, Wang, Shenzhen, Guangdong 518118 (CN); QIN, Cheng, Shenzhen, Guangdong 518118 (CN); ZHANG, Balin, Shenzhen, Guangdong 518118 (CN); YANG, Xiaodan, Shenzhen, Guangdong 518118 (CN); LIANG, Xiaoli, Shenzhen, Guangdong 518118 (CN)
(74) Representative: Taor, Simon Edward William
(86) International application number: PCT/CN2023/116048
(87) International publication number: WO 2024/198224

(57) **Abstract**

A vehicle, comprising a vehicle frame assembly and an energy storage structure. The vehicle frame assembly comprises a vehicle frame front section, a battery pack mounting frame and a vehicle frame rear section which are sequentially connected in the length direction of a vehicle body. The battery pack mounting frame is used for mounting a battery pack.

## Description

### CROSS-REFERENCE TO RELATED APPLICATIONS

The present disclosure claims priority to Chinese Patent Application No. 202310363241.1 filed on March 29, 2023 and the invention title of "VEHICLE FRAME ASSEMBLY, ENERGY STORAGE STRUCTURE, AND VEHICLE", which is incorporated herein by reference in its entirety.

### FIELD

The present disclosure relates to a vehicle frame assembly, an energy storage structure and a vehicle.

### BACKGROUND

In the related art, a battery bracket is usually adopted to suspend and install the battery pack on the front and rear cross-beams of the vehicle frame. At this time, since the vehicle frame limits the installation space of the battery pack, and the battery pack, the battery bracket, the longitudinal beams on both sides, and the middle cross-beam are all independent components, the installation is cumbersome, the installation accuracy requirements are high, the weight is large, and the cost is high.

### SUMMARY

The technical problem to be solved by the present disclosure is as follows: In the existing power battery installation structure, the battery pack, the battery bracket, the longitudinal beams on both sides, and the middle cross-beam are all independent components, which leads to a large weight of the vehicle frame. To solve this issue, a vehicle frame assembly, an energy storage structure, and a vehicle are provided.

To solve the foregoing technical problem, on the one hand, an embodiment of the present disclosure provides a vehicle frame assembly, which includes a vehicle frame front section, a battery pack mounting frame, and a vehicle frame rear section that are sequentially connected along the length direction of the vehicle body. The battery pack mounting frame is used to install the battery pack.

In an embodiment, along the width direction of the vehicle body, the size of the battery pack mounting frame is not less than the size of the vehicle frame front section or the vehicle frame rear section. In other words, along the width direction of the vehicle body, the width of the battery pack mounting frame is not less than the width of the vehicle frame front section or the vehicle frame rear section. In an embodiment, the vehicle frame assembly further includes a connection component. The connection component connects the battery pack mounting frame with the vehicle frame front section and/or connects the battery pack mounting frame with the vehicle frame rear section.

In an embodiment, the vehicle frame front section includes a front cross-beam and two front longitudinal beams. The front cross-beam is connected between the two front longitudinal beams; the vehicle frame rear section includes a rear cross-beam and two rear longitudinal beams. The rear cross-beam is connected between the two rear longitudinal beams; the connection component includes a first connector and a second connector. The first connector connects the battery pack mounting frame with the front cross-beam and/or connects the battery pack mounting frame with the rear cross-beam, and the second connector connects the battery pack mounting frame with the front longitudinal beam and/or connects the battery pack mounting frame with the rear longitudinal beam.

In an embodiment, the vehicle frame assembly further includes a cover plate. The cover plate covers the top of the battery pack mounting frame, and the second connector is arranged with an upward-turned edge for connecting with the cover plate.

In an embodiment, the connection component further includes a third connector. The third connector is arranged on the outer side of the second connector and connects the second connector and the battery pack mounting frame.

The third connector is arranged with a side-turned edge. The side-turned edge is arranged outward along the width direction of the vehicle body to strengthen the strength of the third connector along the width direction of the vehicle body.

In an embodiment, the battery pack mounting frame is formed by a plurality of longitudinal beams, a plurality of cross-beams, and a plurality of vertical beams intersecting with each other to form a space for accommodating at least one layer of battery packs.

In an embodiment, the battery pack mounting frame further includes a plurality of diagonal beams and a plurality of mounting frame reinforcing plates. The diagonal beams are arranged between the intersection points of two longitudinal beams and cross-beams; the mounting frame reinforcing plates are arranged at the bottom and/or the side of the battery pack mounting frame.

According to the vehicle frame assembly provided by the embodiment of the present disclosure, it includes a vehicle frame front section, a battery pack mounting frame, and a vehicle frame rear section that are sequentially connected along the length direction of the vehicle body. The battery pack mounting frame is used to install the battery pack. In this way, the present disclosure is equivalent to dividing the traditional integral vehicle frame into three sections, and the vehicle frame middle section is combined with the battery pack mounting frame. Compared with the prior art, the battery pack mounting frame of the vehicle frame assembly of the present disclosure constitutes the vehicle frame middle section, which can reduce the number of components and the weight of the vehicle frame, is beneficial to the lightweight of the whole vehicle, and improves the vehicle's endurance. In addition, the battery pack is installed on the battery pack mounting frame that constitutes the vehicle frame middle section. When a collision occurs, the battery pack participates in the force-bearing of the whole vehicle, which can improve the torsional stiffness of the whole vehicle.

On the other hand, an embodiment of the present disclosure provides an energy storage structure, which includes a battery pack and the foregoing vehicle frame assembly. The battery pack is installed on the battery pack mounting frame.

In an embodiment, at least one of the two sides of the battery pack along the vehicle body direction is arranged with a notch. The notch is used for the pipeline layout on the vehicle.

Furthermore, an embodiment of the present disclosure provides a vehicle, which includes the foregoing energy storage structure.

### BRIEF DESCRIPTION OF THE DRAWINGS

FIG. 1 is a schematic diagram of an energy storage structure provided by an embodiment of the present disclosure;
FIG. 2 is an exploded view of a vehicle frame assembly provided by an embodiment of the present disclosure;
FIG. 3 is a schematic diagram of the vehicle frame assembly after removing the cover plate provided by an embodiment of the present disclosure;
FIG. 4 is a partially enlarged view of the connection part between the vehicle frame front section and the vehicle frame middle section of the vehicle frame assembly provided by an embodiment of the present disclosure;
FIG. 5 is a partially enlarged view of the connection part between the front end of the left installation reinforcing plate of the battery pack bracket of the vehicle frame assembly and the battery pack bracket provided by an embodiment of the present disclosure;
FIG. 6 is a schematic diagram of the energy storage structure after removing the cover plate provided by an embodiment of the present disclosure;
FIG. 7 is an enlarged view of the part a in FIG. 6;
FIG. 8 is an enlarged view of the part b in FIG. 3;
FIG. 9 is a schematic diagram of the battery pack of the energy storage structure provided by an embodiment of the present disclosure;
FIG. 10 is a schematic diagram of an energy storage structure provided by another embodiment of the present disclosure;

The reference numerals in the specification are as follows:
1. battery pack; 11. notch;
2. vehicle frame front section; 21. front cross-beam; 211. front cross-beam main body; 212. front connector; 22. front longitudinal beam;
3. vehicle frame rear section; 31. rear cross-beam; 311. rear cross-beam main body; 312. rear connector; 32. rear longitudinal beam;
4. battery pack mounting frame; 411. front upper cross-beam; 412. front lower cross-beam; 413. left front vertical beam; 414. right front vertical beam; 415. rear upper cross-beam; 416. rear lower cross-beam; 417. left rear vertical beam; 418. right rear vertical beam; 419. left upper longitudinal beam; 4110. left lower longitudinal beam; 4111. right upper longitudinal beam; 4112. right lower longitudinal beam; 4113. top middle longitudinal beam; 4114. bottom middle longitudinal beam; 4115. middle partition frame; 41151. top middle cross-beam; 41152. left middle vertical beam; 41153. right middle vertical beam; 41154. bottom supporting cross-beam; 411541. first supporting cross-beam; 411542. second supporting cross-beam; 41155. connecting vertical beam; 41156. left diagonal beam; 41157. right diagonal beam; 4116. front supporting cross-beam; 4117. rear supporting cross-beam; 4118. front middle cross-beam; 4119. rear middle cross-beam; 42. left installation reinforcing plate of the battery pack bracket; 43. right installation reinforcing plate of the battery pack bracket; 441. left front connector; 442. right front connector; 443. left rear connector; 444. right rear connector;
5. connection component; 51. first connector; 511. avoidance hole; 52. second connector; 521. upward-turned edge; 522. left front inner reinforcing plate; 523. right front inner reinforcing plate; 524. left rear inner reinforcing plate; 525. right rear inner reinforcing plate; 526. downward-turned edge; 53. third connector; 531. side-turned edge; 532. left front outer reinforcing plate; 533. right front outer reinforcing plate; 534. left rear outer reinforcing plate; 535. right rear outer reinforcing plate;
6. cover plate.

### DETAILED DESCRIPTION

In order to make the technical problems, technical solutions, and beneficial effects solved by the present disclosure clearer, the following further describes the present disclosure in detail with reference to the accompanying drawings and embodiments. It should be understood that the specific embodiments described herein are only used to explain the present disclosure, and are not intended to limit the present disclosure.

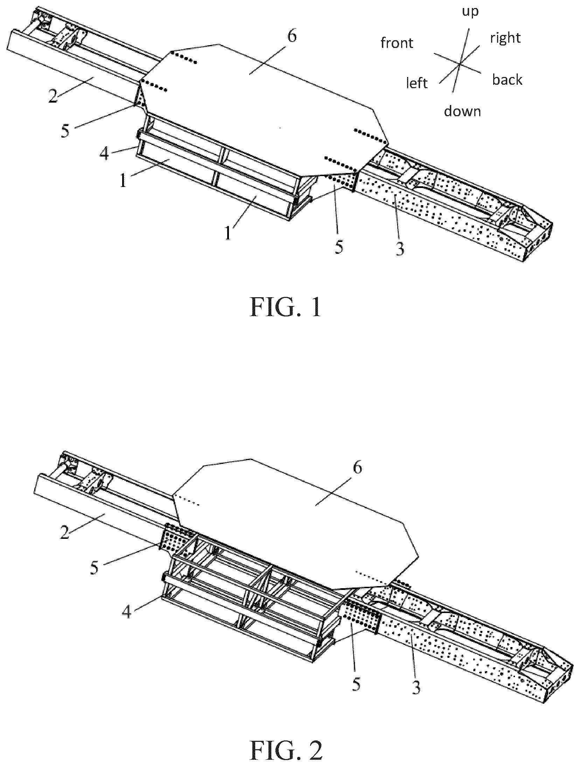

The front, rear, up, down, left, and right in the present disclosure are the vehicle orientations understood in a conventional sense, as shown in the coordinates in FIG. 1.

Referring to FIG. 1 to FIG. 9, an embodiment of the present disclosure provides an energy storage structure, the energy storage structure includes a battery pack 1 and a vehicle frame assembly. The vehicle frame assembly includes a vehicle frame front section 2, a battery pack mounting frame 4, and a vehicle frame rear section 3 that are sequentially connected along the length direction of the vehicle body. The battery pack mounting frame 4 is used to install the battery pack. In other words, the battery pack 1 is integrated on the battery pack mounting frame 4 that constitutes the vehicle frame middle section.

According to the vehicle frame assembly and energy storage structure provided by the embodiment of the present disclosure, it is equivalent to dividing the traditional integral vehicle frame into three sections, and the vehicle frame middle section is combined with the battery pack mounting frame 4. Compared with the prior art, the battery pack mounting frame 4 of the vehicle frame assembly of the present disclosure constitutes the vehicle frame middle section, reducing the girder and cross-beam of the vehicle frame middle section and the connection components used for connecting the girder and cross-beam. Compared with the prior art, the number of parts of the vehicle frame assembly can be reduced by more than 10%, and the weight is reduced by more than 10%, which is beneficial to the lightweight of the whole vehicle and improves the vehicle's endurance. In addition, the battery pack is installed on the battery pack mounting frame 4 that constitutes the vehicle frame middle section. When a collision occurs, the battery pack participates in the force-bearing of the whole vehicle, which can improve the torsional stiffness of the whole vehicle. For example, in the prior art, the torsional stiffness of the whole vehicle is only 7 to 9 modes, while after applying the vehicle frame assembly of the embodiment of the present disclosure, the torsional stiffness of the whole vehicle can reach 14 to 20 modes.

The vehicle frame assembly further includes a connection component 5. The connection component 5 connects the battery pack mounting frame 4 with the vehicle frame front section 2 and/or connects the battery pack mounting frame 4 with the vehicle frame rear section 3.

In one embodiment, along the width direction of the vehicle body, the size of the battery pack mounting frame 4 is not less than the size of the vehicle frame front section 2 or the vehicle frame rear section 3. In other words, along the width direction of the vehicle body, the width of the battery pack mounting frame 4 is not less than the width of the vehicle frame front section or the vehicle frame rear section. In this way, the battery pack mounting frame 4 has sufficient accommodating space to install more batteries and improve the vehicle's endurance.

In one embodiment, referring to FIG. 1, FIG. 6 to FIG. 8, the vehicle frame front section 2 includes a front cross-beam 21 and two front longitudinal beams 22. The front cross-beam 21 is connected between the two front longitudinal beams 22; the vehicle frame rear section 3 includes a rear cross-beam 31 and two rear longitudinal beams 32. The rear cross-beam 31 is connected between the two rear longitudinal beams 32. The connection component 5 includes a first connector 51 and a second connector 52. The first connector 51 connects the battery pack mounting frame 4 with the front cross-beam 21 and/or connects the battery pack mounting frame 4 with the rear cross-beam 31, and the second connector 52 connects the battery pack mounting frame 4 with the front longitudinal beam 22 and/or connects the battery pack mounting frame 4 with the rear longitudinal beam 32.

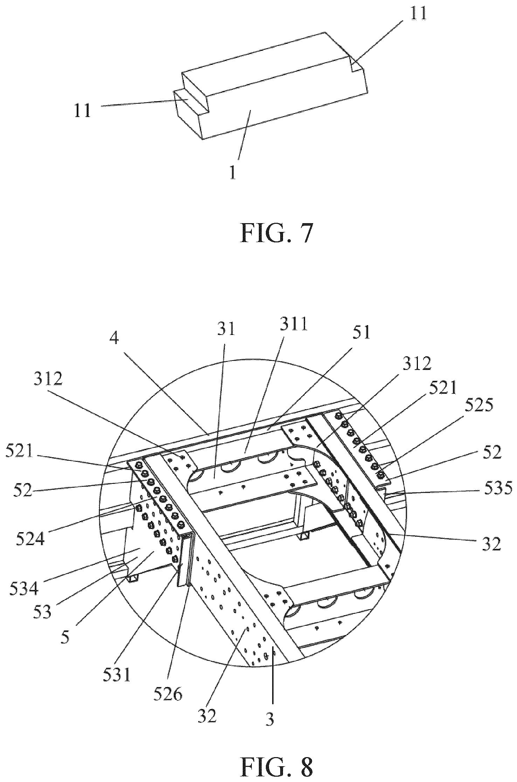

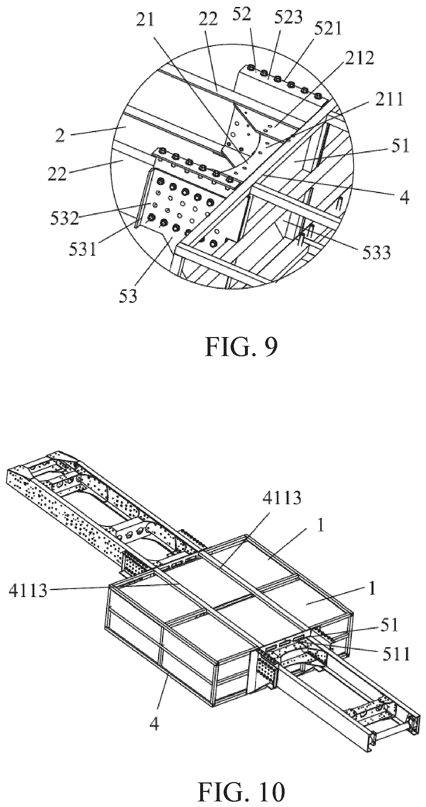

Specifically, referring to FIG. 8 and FIG. 9, the front cross-beam 21 includes a front cross-beam main body 211 and a front connector 212. The front connector 212 is fixed on the inner side of the front longitudinal beam 22. The left end of the front cross-beam main body 211 is fixedly connected to the left front connector 212, and the right end of the front cross-beam main body 211 is fixedly connected to the right front connector 212. The rear cross-beam 31 includes a rear cross-beam main body 311 and a rear connector 312. The rear connector 312 is fixed on the inner side of the rear longitudinal beam 32. The left end of the rear cross-beam main body 311 is fixedly connected to the left rear connector 312, and the right end of the rear cross-beam main body 311 is fixedly connected to the right rear connector 312.

The rear longitudinal beam 32 is a U-shaped beam structure with an opening inward, the rear cross-beam main body 311 is a U-shaped beam structure with an opening facing backward, the rear connector 312 is a U-shaped beam structure with an opening inward. The rear connector 312 is embedded in the rear longitudinal beam 32, and the rear cross-beam main body 311 is inserted into the rear connector 312. The first connector 51 is in the shape of a plate, and the first connector 51 on the rear side is clamped between the front side of the rear cross-beam main body 311 and the rear side of the battery pack mounting frame 4.

Similarly, the front longitudinal beam 22 is a U-shaped beam structure with an opening inward, the front cross-beam main body 211 is a U-shaped beam structure with an opening facing backward, the front connector 212 is a U-shaped beam structure with an opening inward. The front connector 212 is embedded in the front longitudinal beam 22, and the front cross-beam main body 211 is inserted into the front connector 212. The first connector 51 on the rear side is clamped between the rear side of the front cross-beam main body 211 and the front side of the battery pack mounting frame 4.

Preferably, the battery pack mounting frame 4 is connected to the vehicle frame front section 2 through the connection component 5, and the battery pack mounting frame 4 is further connected to the vehicle frame rear section 3 through the connection component 5. In other words, two connection components 5 are provided. The first connector 51 of one connection component 5 connects the battery pack mounting frame 4 with the front cross-beam 21, and the first connector 51 of the other connection component 5 connects the battery pack mounting frame 4 with the rear cross-beam 31. The second connector 52 of one connection component 5 connects the battery pack mounting frame 4 with the front longitudinal beam 22, and the second connector 52 of the other connection component 5 connects the battery pack mounting frame 4 with the rear longitudinal beam 32.

In one embodiment, referring to FIG. 1 and FIG. 2, the vehicle frame assembly further includes a cover plate 6. The second connector 52 is arranged with an upward-turned edge 521 for connecting with the cover plate 6, and the upward-turned edge 521 extends outward along the left-right direction of the vehicle body. The cover plate 6 covers the top of the battery pack mounting frame 4 and is used for the top protection of the battery pack 1. Preferably, the cover plate 6 is fixed on the upward-turned edge 521 of the second connector 52 by fasteners (such as bolts).

When the cover plate 6 is connected to the upward-turned edge 521 of the second connector 52 of the battery pack mounting frame 4 by bolts, if the bolts are too short, their bending resistance and stiffness are poor, and if the bolts are too long, they will occupy a large vertical space. Therefore, preferably, the fixed length of the bolts is 300 to 500 mm.

Of course, in other embodiments, the cover plate 6 can further be riveted or welded to the top of the battery pack mounting frame 4.

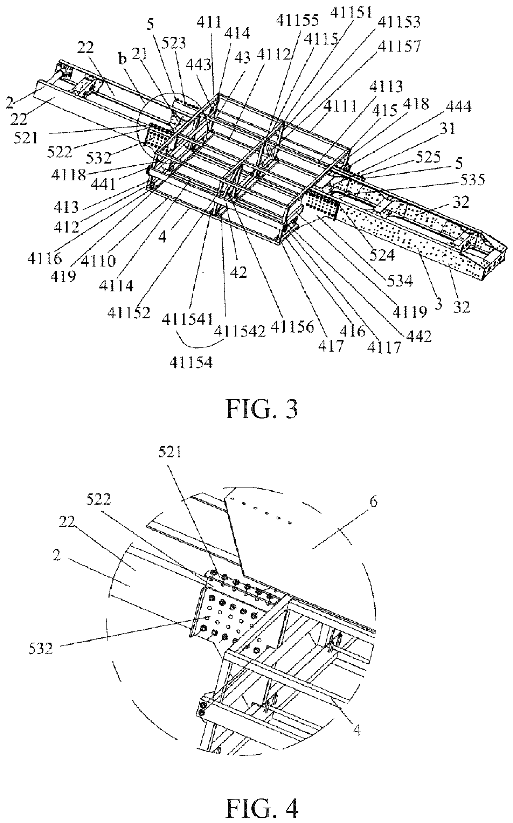

In one embodiment, referring to FIG. 4, FIG. 7 and FIG. 8, the connection component 5 further includes a third connector 53. The third connector 53 is arranged on the outer side of the second connector 52 and connects the second connector 52 and the battery pack mounting frame 4. The third connector 53 is arranged with a side-turned edge 531, and the side-turned edge 531 is arranged outward along the width direction of the vehicle body (the left-right direction in FIG. 1) to strengthen the strength of the third connector 531 along the width direction of the vehicle body.

In one embodiment, referring to FIG. 3 and FIG. 4, two second connectors 52 are arranged on the front side and two on the rear side. The second connectors 52 on the front side are a left front inner reinforcing plate 522 and a right front inner reinforcing plate 523, and the second connectors 52 on the rear side are a left rear inner reinforcing plate 524 and a right rear inner reinforcing plate 525; the left front inner reinforcing plate 522 is closely fixed on the left side of the vehicle frame front section 2 (i.e., the left side of the left front longitudinal beam 21), and the right front inner reinforcing plate 523 is closely fixed on the right side of the vehicle frame front section 2 (i.e., the right side of the right front longitudinal beam 21); the left rear inner reinforcing plate 524 is closely fixed on the left side of the vehicle frame rear section 3 (i.e., the left side of the left rear longitudinal beam 31), and the right rear inner reinforcing plate 525 is closely fixed on the right side of the vehicle frame rear section 3 (i.e., the right side of the right rear longitudinal beam 31). In this way, the connection strength between the front side of the battery pack mounting frame 4 and the vehicle frame front section 2 can be further increased through the left front inner reinforcing plate 522 and the right front inner reinforcing plate 523, and the connection strength between the rear side of the battery pack mounting frame 4 and the vehicle frame rear section 3 can be further increased through the left rear inner reinforcing plate 524 and the right rear inner reinforcing plate 525.

In one embodiment, referring to FIG. 3 and FIG. 4, two third connectors 53 are arranged on the front side and two on the rear side. The third connectors 53 on the front side are a left front outer reinforcing plate 532 and a right front outer reinforcing plate 533, and the third connectors 53 on the rear side are a left rear outer reinforcing plate 534 and a right rear outer reinforcing plate 535; the left front outer reinforcing plate 532 is closely fixed on the left side of the left front inner reinforcing plate 522, and the left front outer reinforcing plate 532 is fixedly connected between the left side of the vehicle frame front section 2 (i.e., the left front longitudinal beam 21) and the front end of the battery pack mounting frame 4 by bolts, riveting or welding; the right front outer reinforcing plate 533 is closely fixed on the right side of the right front inner reinforcing plate 523, and the right front outer reinforcing plate 533 is fixedly connected between the right side of the vehicle frame front section 2 (i.e., the right front longitudinal beam 21) and the front end of the battery pack mounting frame 4 by bolts, riveting or welding; the left rear outer reinforcing plate 534 is closely fixed on the left side of the left rear inner reinforcing plate 524, and the left rear outer reinforcing plate 534 is fixedly connected between the left side of the vehicle frame rear section 3 (the left rear longitudinal beam 31) and the rear end of the battery pack mounting frame 4 by bolts, riveting or welding; the right rear outer reinforcing plate 535 is closely fixed on the right side of the right rear inner reinforcing plate 525, and the right rear outer reinforcing plate 535 is fixedly connected between the right side of the vehicle frame rear section 3 (the right rear longitudinal beam 31) and the rear end of the battery pack mounting frame 4 by bolts, riveting or welding. In this way, the connection strength between the front side of the battery pack mounting frame 4 and the vehicle frame front section 2 can be increased through the left front outer reinforcing plate 532 and the right front outer reinforcing plate 533, and the connection strength between the rear side of the battery pack mounting frame 4 and the vehicle frame rear section 3 can be increased through the left rear outer reinforcing plate 534 and the right rear outer reinforcing plate 535.

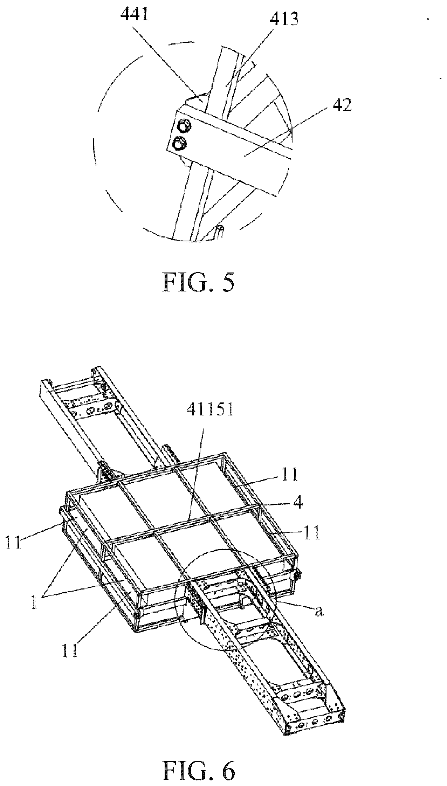

In one embodiment, referring to FIG. 3 and FIG. 6, the battery pack mounting frame 4 is a single-layer frame structure formed by a plurality of longitudinal beams, a plurality of cross-beams and a plurality of vertical beams intersecting with each other to form a space for accommodating one layer of battery packs 1. The battery pack mounting frame 4 is approximately square, and there are multiple battery packs 1, and the multiple battery packs 1 are arranged in a single layer in the up-down direction. For example, in the embodiment shown in FIG. 1, there are two battery packs 1, and the two battery packs 1 are arranged in the front-rear direction (front and rear arrangement).

The longitudinal beams extend in the front-rear direction of the vehicle body, the cross-beams extend in the left-right direction of the vehicle body, and the vertical beams extend in the up-down direction of the vehicle body.

However, in other embodiments, corresponding to the single-layer frame structure of the battery pack mounting frame 4, only one battery pack 1 can further be provided.

Of course, in other embodiments, corresponding to the single-layer frame structure of the battery pack mounting frame 4, multiple battery packs 1 can further be provided. The multiple battery packs 1 are arranged left and right, or the multiple battery packs 1 are arranged in multiple rows and columns (rectangular array arrangement).

The single-layer frame structure of the battery pack mounting frame 4 can be used for vehicle models with a small number of required battery packs 1. Or for vehicle models with a small installation space for the battery packs 1 in the vertical direction.

Of course, in other embodiments, when there are multiple battery packs 1, the battery pack mounting frame 4 can further be a multi-layer frame structure formed by a plurality of longitudinal beams and a plurality of cross-beams intersecting with each other to form a space for accommodating multiple layers of battery packs 1. The multiple battery packs 1 are arranged in multiple layers in the up-down direction. At this time, each layer of the multi-layer frame structure is used to install the battery packs 1 of the corresponding layer. One or more battery packs 1 are arranged in each layer. When there are multiple battery packs 1 in each layer, the multiple battery packs 1 in each layer are arranged front and rear or left and right, or the multiple battery packs 1 in each layer are arranged in multiple rows and columns, or the multiple battery packs 1 in some layers are arranged front and rear or left and right, and the multiple battery packs 1 in some layers are arranged in multiple rows and columns.

The multi-layer frame structure of the battery pack mounting frame 4 can be used for vehicle models with a large number of required battery packs 1. Or for vehicle models with a large installation height of the battery packs 1 in the vertical direction.

In summary, the energy storage structure of the embodiment of the present disclosure can arrange multiple battery packs in the X direction (the front-rear direction of the vehicle body), the Y direction (the left-right direction of the vehicle body), and the Z direction (the up-down direction of the vehicle body) according to the size of the whole vehicle.

In one embodiment, referring to FIG. 2 and FIG. 3, the battery pack mounting frame 4 is a square frame structure. The multiple cross-beams of the battery pack mounting frame 4 include a front upper cross-beam 411, a front lower cross-beam 412, a rear upper cross-beam 415 and a rear lower cross-beam 416, the multiple longitudinal beams of the battery pack mounting frame 4 include a left front vertical beam 413, a right front vertical beam 414, a right upper longitudinal beam 4111 and a right lower longitudinal beam 4112, the multiple vertical beams of the battery pack mounting frame 4 include a left front vertical beam 413, a right front vertical beam 414, a left rear vertical beam 417 and a right rear vertical beam 418. The front upper cross-beam 411, the front lower cross-beam 412, the rear upper cross-beam 415 and the rear lower cross-beam 416 extend in the left-right direction of the vehicle body, the left upper longitudinal beam 419, the left lower longitudinal beam 4110, the right upper longitudinal beam 4111 and the right lower longitudinal beam 4112 extend in the front-rear direction of the vehicle body, and the left front vertical beam 413, the right front vertical beam 414, the left rear vertical beam 417 and the right rear vertical beam 418 extend in the up-down direction of the vehicle body; the front upper cross-beam 411 is fixedly connected between the front end of the left upper longitudinal beam 419 and the front end of the right upper longitudinal beam 4111, the front lower cross-beam 412 is fixedly connected between the front end of the left lower longitudinal beam 4110 and the front end of the right lower longitudinal beam 4112, the left front vertical beam 413 is fixedly connected between the front end of the left upper longitudinal beam 419 and the front end of the left lower longitudinal beam 4110, the right front vertical beam 414 is fixedly connected between the front end of the right upper longitudinal beam 4111 and the front end of the right lower longitudinal beam 4112, the rear upper cross-beam 415 is fixedly connected between the rear end of the left upper longitudinal beam 419 and the rear end of the right upper longitudinal beam 4111, the rear lower cross-beam 416 is fixedly connected between the rear end of the left lower longitudinal beam 4110 and the rear end of the right lower longitudinal beam 4112, the left rear vertical beam 417 is fixedly connected between the rear end of the left upper longitudinal beam 419 and the rear end of the left lower longitudinal beam 4110, and the right rear vertical beam 418 is fixedly connected between the rear end of the right upper longitudinal beam 4111 and the rear end of the right lower longitudinal beam 4112; the front upper cross-beam 411, the left front vertical beam 413, the front lower cross-beam 412 and the right front vertical beam 414 are connected in sequence to form a front closed-loop frame structure to enhance the front strength of the battery pack mounting frame 4. The rear upper cross-beam 415, the left rear vertical beam 417, the rear lower cross-beam 416 and the right rear vertical beam 418 are connected in sequence to form a rear closed-loop frame structure to enhance the rear strength of the battery pack mounting frame 4. The front upper cross-beam 411, the left upper longitudinal beam 419, the rear upper cross-beam 415 and the right upper longitudinal beam 4111 are connected in sequence to form a top closed-loop frame structure to enhance the top strength of the battery pack mounting frame 4. The front lower cross-beam 412, the left lower longitudinal beam 4110, the rear lower cross-beam 416 and the right lower longitudinal beam 4112 are connected in sequence to form a bottom closed-loop frame structure to enhance the bottom strength of the battery pack mounting frame 4. The left upper longitudinal beam 419, the left front vertical beam 413, the left lower longitudinal beam 4110 and the left rear vertical beam 418 are connected in sequence to form a left closed-loop frame structure to enhance the left strength of the battery pack mounting frame 4. The right upper longitudinal beam 4111, the right front vertical beam 414, the right lower longitudinal beam 4112 and the right rear vertical beam 418 are connected in sequence to form a right closed-loop frame structure to enhance the right strength of the battery pack mounting frame 4.

In this way, the front closed-loop frame structure, the rear closed-loop frame structure, the top closed-loop frame structure, the bottom closed-loop frame structure, the left closed-loop frame structure and the right closed-loop frame structure can enhance the strength of the battery pack mounting frame 4 in all directions and enhance the overall strength of the battery pack mounting frame 4, so that the battery pack 1 can be well protected from all directions when the vehicle collides.

In one embodiment, referring to FIG. 2 and FIG. 3, the multiple longitudinal beams of the battery pack mounting frame 4 further include a top middle longitudinal beam 4113 and a bottom middle longitudinal beam 4114. The top middle longitudinal beam 4113 and the bottom middle longitudinal beam 4114 extend in the front-rear direction of the vehicle body; there is one top middle longitudinal beam 4113 or multiple top middle longitudinal beams 4113 are arranged in parallel, and there is one bottom middle longitudinal beam 4114 or multiple bottom middle longitudinal beams 4114 are arranged in parallel. For example, in the embodiment shown in FIG. 3, there are two top middle longitudinal beams 4113 and two bottom middle longitudinal beams 4114, and the top middle longitudinal beam 4113 is aligned with the corresponding bottom middle longitudinal beam 4114 in the vertical direction. The top middle longitudinal beam 4113 is connected between the front upper cross-beam 411 and the rear upper cross-beam 415, and the top middle longitudinal beam 4113 is located between the left upper longitudinal beam 419 and the right upper longitudinal beam 4111 in the left-right direction of the vehicle frame assembly; the bottom middle longitudinal beam 4114 is connected between the front lower cross-beam 412 and the rear lower cross-beam 416, and the bottom middle longitudinal beam 4114 is located between the left lower longitudinal beam 4110 and the right lower longitudinal beam 4112 in the left-right direction of the vehicle frame assembly. The top middle longitudinal beam 4113 can enhance the top strength of the battery pack mounting frame 4, and the bottom middle longitudinal beam 4114 can enhance the bottom strength of the battery pack mounting frame 4. Furthermore, the overall strength of the battery pack mounting frame 4 is further enhanced.

In one embodiment, referring to FIG. 2 and FIG. 3, the battery pack mounting frame 4 further includes a middle partition frame 4115 for separating the battery packs 1 in the front-rear direction. One or more middle partition frames 4115 are provided to divide the interior of the battery pack mounting frame 4 into multiple battery pack installation spaces arranged in the front-rear direction. In this way, each battery pack installation space can be used to place a battery pack 1, which can increase the number of battery packs 1.

For example, in the embodiment shown in FIG. 2, there is one middle partition frame 4115 that divides the interior of the battery pack mounting frame 4 into two battery pack installation spaces arranged in the front-rear direction. One or more battery packs can be arranged in each battery pack installation space.

Of course, in other embodiments, the battery pack mounting frame 4 may further include a middle partition frame for separating the battery packs 1 in the left-right direction. One or more middle partition frames are provided to divide the interior of the battery pack mounting frame 4 into multiple battery pack installation spaces arranged in the left-right direction.

In one embodiment, referring to FIG. 2 and FIG. 3, the middle partition frame 4115 includes a top middle cross-beam 41151 (forming the cross-beam of the battery pack mounting frame 4), a left middle vertical beam 41152 (forming the vertical beam of the battery pack mounting frame 4), a right middle vertical beam 41153 (forming the vertical beam of the battery pack mounting frame 4) and a bottom supporting cross-beam 41154 (forming the cross-beam of the battery pack mounting frame 4). The top middle cross-beam 41151 and the bottom supporting cross-beam 41154 extend in the left-right direction of the vehicle body, and the left middle vertical beam 41152 and the right middle vertical beam 41153 extend in the up-down direction of the vehicle body; the top middle cross-beam 41151 is connected between the left upper longitudinal beam 419 and the right upper longitudinal beam 4111, and the top middle cross-beam 41151 is located between the front upper cross-beam 411 and the rear upper cross-beam 415 in the front-rear direction of the vehicle frame assembly; the bottom supporting cross-beam 41154 is connected between the left lower longitudinal beam 4110 and the right lower longitudinal beam 4112, and the bottom supporting cross-beam 41154 is located between the front lower cross-beam 415 and the rear lower cross-beam 616 in the front-rear direction of the vehicle frame assembly; the upper end of the left middle vertical beam 41152 is connected to the connection point of the top middle cross-beam 41151 and the left upper longitudinal beam 419, the lower end of the left middle vertical beam 41152 is connected to the connection point of the left lower longitudinal beam 4110 and the bottom supporting cross-beam 41154, the upper end of the right middle vertical beam 41153 is connected to the connection point of the top middle cross-beam 41151 and the right upper longitudinal beam 4111, and the lower end of the right middle vertical beam 41153 is connected to the connection point of the right lower longitudinal beam 4112 and the bottom supporting cross-beam 41154; the top middle cross-beam 41151, the left middle vertical beam 41152, the bottom supporting cross-beam 41154 and the right middle vertical beam 41153 are connected in sequence to form a middle closed-loop frame structure. The middle partition frame 4115 can enhance the middle strength of the battery pack mounting frame 4. Furthermore, the overall strength of the battery pack mounting frame 4 is further enhanced.

In one embodiment, referring to FIG. 2 and FIG. 3, the bottom supporting cross-beam 41154 includes a first supporting cross-beam 411541 and a second supporting cross-beam 411542. The first supporting cross-beam 411541 is located in front of the second supporting cross-beam 411542. The lower end of the left middle vertical beam 41152 is located between the left end of the first supporting cross-beam 411541 and the left end of the second supporting cross-beam 411542, and the lower end of the right middle vertical beam 41153 is located between the right end of the first supporting cross-beam 411541 and the right end of the second supporting cross-beam 411542. The bottom supporting cross-beam 41154 and the bottom middle longitudinal beam 4114 jointly support the bottom of the battery pack 1.

In one embodiment, referring to FIG. 2 and FIG. 3, the battery pack mounting frame 4 further includes a front supporting cross-beam 4116 (forming the cross-beam of the battery pack mounting frame 4) and a rear supporting cross-beam 4117 (forming the cross-beam of the battery pack mounting frame 4); the front supporting cross-beam 4116 is connected between the front end of the left lower longitudinal beam 4110 and the front end of the right lower longitudinal beam 4112, and the front supporting cross-beam 4116 is located behind the front lower cross-beam 412; the rear supporting cross-beam 4117 is connected between the rear end of the left lower longitudinal beam 4110 and the rear end of the right lower longitudinal beam 4112, and the rear supporting cross-beam 4117 is located in front of the rear lower cross-beam 416; the front supporting cross-beam 4116 and the first supporting cross-beam 411541 are used to support the bottom of a front-side battery pack 1, and the rear supporting cross-beam 4117 and the second supporting cross-beam 411542 are used to support the bottom of a rear-side battery pack 1. In this way, the front and rear sides of the bottom of the front-side battery pack 1 are supported by the front supporting cross-beam 4116 and the first supporting cross-beam 411541, and the bottom middle longitudinal beam 4114 further supports the bottom of the front-side battery pack 1, so the front-side battery pack 1 is stably supported. Similarly, the front and rear sides of the bottom of the rear-side battery pack 1 are supported by the second supporting cross-beam 411542 and the rear supporting cross-beam 4117, and the bottom middle longitudinal beam 4114 further supports the bottom of the rear-side battery pack 1, so the rear-side battery pack 1 is stably supported.

If the battery pack mounting frame 4 is a multi-layer frame structure, the bottom of the upper-layer frame structure and the top of the lower-layer frame structure are combined into one to save materials and reduce the weight of the battery pack mounting frame 4.

In one embodiment, referring to FIG. 2 and FIG. 3, the middle partition frame 4115 further includes a connecting vertical beam 41155 (forming the vertical beam of the battery pack mounting frame 4). The connecting vertical beam 41155 extends in the up-down direction of the vehicle body. The upper end of the connecting vertical beam 41155 is connected to the junction of the top middle longitudinal beam 4113 and the top middle cross-beam 41151, and the lower end of the connecting vertical beam 41155 is connected to the bottom middle longitudinal beam 4114 and is located between the first supporting cross-beam 411541 and the second supporting cross-beam 411542. The connecting vertical beam 41155 can enhance the strength of the middle partition frame 4115.

In one embodiment, referring to FIG. 2 and FIG. 3, there are two top middle longitudinal beams 4113, two bottom middle longitudinal beams 4114 and two connecting vertical beams 41155. The left top middle longitudinal beam 4113 is directly above the left bottom middle longitudinal beam 4114, the right top middle longitudinal beam 4113 is directly above the right bottom middle longitudinal beam 4114, the left connecting vertical beam 41155 is fixedly connected between the left top middle longitudinal beam 4113 and the left bottom middle longitudinal beam 4114, and the right connecting vertical beam 41155 is fixedly connected between the right top middle longitudinal beam 4113 and the right bottom middle longitudinal beam 4114. The top middle longitudinal beams 4113, the bottom middle longitudinal beams 4114, and the connecting vertical beams 41155 are each provided in pairs, further increasing the strength of the battery pack mounting frame 4.

In one embodiment, the battery pack mounting frame 4 further includes multiple diagonal beams, and the diagonal beams are arranged between the intersection points of two longitudinal beams and cross-beams.

In a specific embodiment, referring to FIG. 2 and FIG. 3, the middle partition frame 4115 further includes a left diagonal beam 41156 (forming the diagonal beam of the battery pack mounting frame 4) and a right diagonal beam 41157 (forming the diagonal beam of the battery pack mounting frame 4); the upper end of the left diagonal beam 41156 is connected to the junction of the left top middle longitudinal beam 4113 and the top middle cross-beam 41151, and the lower end of the left diagonal beam 51156 is connected to the left lower longitudinal beam 4110 and is located between the first supporting cross-beam 411541 and the second supporting cross-beam 511542; the upper end of the right diagonal beam 41157 is connected to the junction of the right top middle longitudinal beam 4113 and the top middle cross-beam 41151, and the lower end of the right diagonal beam 41157 is connected to the right lower longitudinal beam 4112 and is located between the first supporting cross-beam 411541 and the second supporting cross-beam 411542. The left diagonal beam 41156 and the right diagonal beam 41157 can further enhance the strength of the middle partition frame 4115.

In one embodiment, the battery pack mounting frame 4 further includes multiple mounting frame reinforcing plates, and the mounting frame reinforcing plates are arranged at the bottom and/or the side of the battery pack mounting frame.

In one embodiment, referring to FIG. 2 to FIG. 5, the multiple mounting frame reinforcing plates include a left installation reinforcing plate 42 of the battery pack bracket and a right installation reinforcing plate 43 of the battery pack bracket. The left installation reinforcing plate 42 of the battery pack bracket and the right installation reinforcing plate 43 of the battery pack bracket extend in the front-rear direction of the vehicle body. The left installation reinforcing plate 42 of the battery pack bracket is detachably connected between the middle part of the left front vertical beam 413 and the middle part of the left rear vertical beam 417, and the right installation reinforcing plate 413 of the battery pack bracket is detachably connected between the middle part of the right front vertical beam 414 and the middle part of the right rear vertical beam 418. In this way, when the left installation reinforcing plate 42 of the battery pack bracket and the right installation reinforcing plate 43 of the battery pack bracket are provided, the battery pack 1 can be installed into the battery pack mounting frame 4 from the left side or the right side of the battery pack mounting frame 4. The left installation reinforcing plate 42 of the battery pack bracket can strengthen the left side of the battery pack mounting frame 4 and, at the same time, can play a role in anti-collision on the left side of the battery pack 1. The right installation reinforcing plate 42 of the battery pack bracket can strengthen the right side of the battery pack mounting frame 4 and, at the same time, can play a role in anti-collision on the right side of the battery pack 1.

Of course, in other embodiments, one of the left installation reinforcing plate 42 of the battery pack bracket and the right installation reinforcing plate 43 of the battery pack bracket may be non-detachable.

In one embodiment, referring to FIG. 2 to FIG. 5, the multiple cross-beams of the battery pack mounting frame 4 further include a front middle cross-beam 4118 and a rear middle cross-beam 4119. The front middle cross-beam 4118 and the rear middle cross-beam 4119 extend in the left-right direction of the vehicle body; the front middle cross-beam 4118 is connected between the middle part of the left front vertical beam 413 and the middle part of the right front vertical beam 414, and the rear middle cross-beam 4119 is connected between the middle part of the left rear vertical beam 417 and the middle part of the right rear vertical beam 418. The front middle cross-beam 4118 can strengthen the front side of the battery pack mounting frame 4, and the rear middle cross-beam 4119 can strengthen the rear side of the battery pack mounting frame 4.

In one embodiment, referring to FIG. 2 to FIG. 5, the battery pack mounting frame 4 further includes a left front connector 441, a right front connector 442, a left rear connector 443 and a right rear connector 444. The left front connector 441 is fixed on the left front vertical beam 413 by bolts, riveting or welding, the right front connector 442 is fixed on the right front vertical beam 414 by bolts, riveting or welding, the left rear connector 443 is fixed on the left rear vertical beam 417 by bolts, riveting or welding, and the right rear connector 444 is fixed on the right rear vertical beam 418 by bolts, riveting or welding; the front end of the left installation reinforcing plate 42 of the battery pack bracket is fixed on the left front connector 441 by bolts, the rear end of the left installation reinforcing plate 42 of the battery pack bracket is fixed on the left rear connector 443 by bolts, the front end of the right installation reinforcing plate 43 of the battery pack bracket is fixed on the right front connector 442 by bolts, and the rear end of the right installation reinforcing plate 43 of the battery pack bracket is fixed on the right rear connector 444 by bolts.

Providing the left front connector 441, the right front connector 442, the left rear connector 443 and the right rear connector 444 can, on the one hand, increase the connection strength at the connection part, and on the other hand, facilitate the disassembly and assembly of the left installation reinforcing plate 42 of the battery pack bracket and the right installation reinforcing plate 43 of the battery pack bracket.

In addition, the second connector 52 can further be welded to the battery pack mounting frame 4. In other words, the left front inner reinforcing plate 522, the right front inner reinforcing plate 523, the left rear inner reinforcing plate 524 and the right rear inner reinforcing plate 525 can further be welded to the battery pack mounting frame 4 to further increase the connection strength.

The left front inner reinforcing plate 522 and the right front inner reinforcing plate 523 can be welded to the vehicle frame front section 2, and the left rear inner reinforcing plate 524 and the right rear inner reinforcing plate 525 can be welded to the vehicle frame rear section 3.

In one embodiment, referring to FIG. 9, the second connector 52 is further arranged with a downward-turned edge 526, and the downward-turned edge 526 extends inward along the left-right direction of the vehicle body. The downward-turned edge 526 of the left front inner reinforcing plate 522 supports the left side of the bottom of the vehicle frame front section 2 (the bottom surface of the left front longitudinal beam 21). The downward-turned edge 526 of the right front inner reinforcing plate 523 supports the right side of the bottom of the vehicle frame front section 4 (the bottom surface of the right front longitudinal beam 21); the downward-turned edge 526 of the left rear inner reinforcing plate 524 supports the left side of the bottom of the vehicle frame rear section 3 (the bottom surface of the left rear longitudinal beam 31); the downward-turned edge 526 of the right rear inner reinforcing plate 525 supports the right side of the bottom of the vehicle frame rear section 4 (the bottom surface of the right rear longitudinal beam 31). The downward-turned edge 526 can increase the contact area between the second connector 52 and the vehicle frame front section 2 and the vehicle frame rear section 3, and enhance the connection strength.

In one embodiment, the connection component 5 further includes a diagonal bracing beam, and the diagonal bracing beam connects the downward-turned edge 526 and the battery pack mounting frame 4. Specifically, the diagonal bracing beams of the multiple connection components 5 are divided into a left front diagonal bracing beam of the battery pack bracket, a right front diagonal bracing beam of the battery pack bracket, a left rear diagonal bracing beam of the battery pack bracket and a right rear diagonal bracing beam of the battery pack bracket; the upper end of the left front diagonal bracing beam of the battery pack bracket is fixed on the lower surface of the downward-turned edge 526 of the left front inner reinforcing plate 522 by bolts, riveting or welding, the lower end of the left front diagonal bracing beam of the battery pack bracket is fixed on the front side of the battery pack mounting frame 4 (the front lower cross-beam 412) by welding, and the left side of the left front diagonal bracing beam of the battery pack bracket is fixed on the right side of the left front outer reinforcing plate 532. The upper end of the right front diagonal bracing beam of the battery pack bracket is fixed on the lower surface of the downward-turned edge 526 of the right front inner reinforcing plate 523, the lower end of the right front diagonal bracing beam of the battery pack bracket is fixed on the front side of the battery pack mounting frame 4 (the front lower cross-beam 412), and the right side of the right front diagonal bracing beam of the battery pack bracket is fixed on the left side of the right front outer reinforcing plate 533; the left front diagonal bracing beam of the battery pack bracket and the right front diagonal bracing beam of the battery pack bracket can further increase the connection strength between the front side of the battery pack mounting frame 4 and the vehicle frame front section 2.

The upper end of the left rear diagonal bracing beam of the battery pack bracket is fixed on the lower surface of the downward-turned edge 526 of the left rear inner reinforcing plate 524, the lower end of the left rear diagonal bracing beam of the battery pack bracket is fixed on the rear side of the battery pack mounting frame 4 (the rear lower cross-beam 416), and the left side of the left rear diagonal bracing beam of the battery pack bracket is fixed on the right side of the left rear outer reinforcing plate 534; the upper end of the right rear diagonal bracing beam of the battery pack bracket is fixed on the lower surface of the downward-turned edge 526 of the right rear inner reinforcing plate 525, the lower end of the right rear diagonal bracing beam of the battery pack bracket is fixed on the rear side of the battery pack mounting frame 4 (the rear lower cross-beam 416), and the right side of the right rear diagonal bracing beam of the battery pack bracket is fixed on the left side of the right rear outer reinforcing plate 535. The left rear diagonal bracing beam of the battery pack bracket and the right rear diagonal bracing beam of the battery pack bracket can further increase the connection strength between the rear side of the battery pack mounting frame 4 and the vehicle frame rear section 3.

In one embodiment, referring to FIG. 6 and FIG. 7, the battery pack 1 is in the shape of a "convex" character, in other words, notches 11 are arranged on both sides of the battery pack 1 along the vehicle body direction, and the notches 11 are used for the pipeline layout of the vehicle. A pipeline layout space is reserved at the notch 11 of the battery pack 1, which is convenient for the pipeline layout of the whole vehicle. In addition, the notches 11 are located on the opposite sides of the battery pack 1, so the pipelines are easier to disassemble, assemble and maintain, and it is convenient to arrange the connectors.

However, in other embodiments, the notch 11 can further be opened only on one side of the battery pack 1 in the left-right direction of the vehicle body. In other words, the notch 11 is opened only on one side of the battery pack 1 in the left-right direction of the vehicle body. At this time, it is equivalent to opening a notch 11 on one side of the square battery pack 1.

In addition, referring to FIG. 10, the energy storage structure provided by another embodiment of the present disclosure is different from the embodiment shown in FIG. 1 in that the battery pack 1 is square. At this time, in order to arrange the pipelines of the vehicle, the part of the top middle cross-beam 41151 located between the two top middle longitudinal beams 4113 is removed. The area between the two top middle longitudinal beams 4113 is used for the pipeline layout of the vehicle.

The first connectors 51 are fixedly connected to both the front and rear sides of the battery pack mounting frame 4, and the first connectors 51 are arranged with avoidance holes 511 for the pipelines to pass through. Compared with the "convex"-shaped battery pack 1, the square battery pack 1 does not need to open notches on the opposite sides, the internal space utilization rate of the square battery pack 1 is higher, more batteries can be accommodated inside, which is beneficial to increasing the capacity of the battery pack and improving the endurance of the whole vehicle.

In addition, an embodiment of the present disclosure provides a vehicle, which includes the energy storage structure of the foregoing embodiment.

The above are only the preferred embodiments of the present disclosure and are not intended to limit the present disclosure. Any modifications, equivalent replacements, improvements, etc. made within the spirit and principles of the present disclosure shall be included in the protection scope of the present disclosure.

## Claims

1. A vehicle frame assembly, comprising a vehicle frame front section (2), a battery pack mounting frame (4) and a vehicle frame rear section (3) which are sequentially connected along the length direction of the vehicle body, the battery pack mounting frame (4) being used to install a battery pack (1).

2. The vehicle frame assembly according to claim 1, wherein along the width direction of the vehicle body, the size of the battery pack mounting frame (4) is not less than the size of the vehicle frame front section (2) or the vehicle frame rear section (3).

3. The vehicle frame assembly according to claim 2, wherein the vehicle frame assembly further comprises a connection component (5), the connection component (5) connects the battery pack mounting frame (4) with the vehicle frame front section (2) and/or connects the battery pack mounting frame (4) with the vehicle frame rear section (3).

4. The vehicle frame assembly according to claim 3, wherein the vehicle frame front section (2) comprises a front cross-beam (21) and two front longitudinal beams (22), the front cross-beam (21) is connected between the two front longitudinal beams (22); the vehicle frame rear section (3) comprises a rear cross-beam (31) and two rear longitudinal beams (32), the rear cross-beam (31) is connected between the two rear longitudinal beams (32); the connection component (5) comprises a first connector (51) and a second connector (52), the first connector (51) connects the battery pack mounting frame (4) with the front cross-beam (21) and/or connects the battery pack mounting frame (4) with the rear cross-beam (31), the second connector (52) connects the battery pack mounting frame (4) with the front longitudinal beam (22) and/or connects the battery pack mounting frame (4) with the rear longitudinal beam (32).

5. The vehicle frame assembly according to claim 4, wherein the vehicle frame assembly further comprises a cover plate (6), the cover plate (6) covers the top of the battery pack mounting frame (4), the second connector (52) is arranged with an upward-turned edge (521) for connecting with the cover plate (6).

6. The vehicle frame assembly according to claim 4, wherein the connection component further comprises a third connector (53), the third connector (53) is arranged on the outer side of the second connector (52) and connects the second connector (52) and the battery pack mounting frame (4);
the third connector (53) is arranged with a side-turned edge (531), the side-turned edge (531) is arranged outward along the width direction of the vehicle body to strengthen the strength of the third connector (53) along the width direction of the vehicle body.

7. The vehicle frame assembly according to claim 1, wherein the battery pack mounting frame (4) is formed by a plurality of longitudinal beams, a plurality of cross-beams and a plurality of vertical beams intersecting with each other to form a space for accommodating at least one layer of battery packs (1).

8. The vehicle frame assembly according to claim 1, wherein the battery pack mounting frame further comprises a plurality of diagonal beams and a plurality of mounting frame reinforcing plates, the diagonal beams are arranged between the intersection points of two longitudinal beams and cross-beams, the mounting frame reinforcing plates are arranged at the bottom and/or the side of the battery pack mounting frame.

9. An energy storage structure, comprising a battery pack (1) and the vehicle frame assembly according to any one of claims 1 to 8, the battery pack (1) is installed on the battery pack mounting frame.

10. The energy storage structure according to claim 9, wherein at least one of the two sides of the battery pack along the vehicle body direction is arranged with a notch (11), the notch (11) is used for the pipeline layout on the vehicle.

11. A vehicle, comprising the energy storage structure according to claim 9 or 10.
